# EUROPÄISCHE PATENTSCHRIFT

(11) **EP 3 031 131 B1**
(45) Veröffentlichungstag und Bekanntmachung des Hinweises auf die Patenterteilung: **31.05.2017**
(21) Anmeldenummer: 14749711.9
(22) Anmeldetag: 11.07.2014
(51) Int. Cl.: H02K 7/108

(54) **ELEKTRISCHE MASCHINE UND KRAFFAHRZEUGANTRIEBSSTRANG**
ELECTRIC MACHINE AND MOTOR VEHICLE DRIVE TRAIN
MACHINE ÉLECTRIQUE ET CHAÎNE CINÉMATIQUE DE VÉHICULE AUTOMOBILE

(30) Priorität: 08.08.2013 DE 102013215642
(43) Veröffentlichungstag der Anmeldung: 15.06.2016
(73) Patentinhaber: Schaeffler Technologies AG & Co. KG, 91074 Herzogenaurach (DE)
(72) Erfinder: NACHTMANN, Florian, F-67100 Strassburg (FR); AHNERT, Gerd, 77880 Sasbach (DE)
(86) Internationale Anmeldenummer: PCT/DE2014/200315
(87) Internationale Veröffentlichungsnummer: WO 2015/018406

(56) Entgegenhaltungen:
- WO-A1-2009/056092
- WO-A1-2013/087061
- DE-A1- 2 444 918
- DE-A1- 10 011 418
- DE-A1-102005 044 225
- DE-A1-102011 050 709
- DE-A1-102012 203 468
- DE-A1-102012 207 325
- FR-A1- 2 765 288
- US-A- 5 690 203
- US-A- 5 845 750

## Beschreibung

Die Erfindung betrifft eine elektrische Maschine für einen Kraftfahrzeugantriebsstrang gemäß dem Oberbegriff des Anspruchs 1.

Die WO 2014/090249 A1 betrifft eine Kupplungsvorrichtung, insbesondere Zuschaltkupplung für einen Verbrennungsmotor eines Hybridfahrzeugs, mit einer Gegendruckplatte, einer in axialer Richtung begrenzt verlagerbaren Anpressplatte zur reibschlüssigen Klemmung einer Kupplungsscheibe zwischen der Anpressplatte und der Gegendruckplatte, einem auf die Anpressplatte wirkenden Hebelelement zur Verlagerung der Anpressplatte in axialer Richtung, einem zumindest teilweise zwischen der Anpressplatte und dem Hebelelement angeordneten Zentralflansch mit zumindest einer Durchgriffsmöglichkeit für die Anpressplatte und/oder das Hebelelement, und einer Verschleißnachstelleinrichtung zur automatischen Nachstellung von Kupplungsverschleiß, wobei zur Verhinderung einer ungewollten Nachstellung von Kupplungsverschleiß das Hebelelement mit dem Zentralflansch in Anlage bringbar ist.

Die Verschleißnachstelleinrichtung weist eine Sensorfeder auf, die mittelbar oder unmittelbar zwischen dem Zentralflansch und dem Hebelelement verspannt ist. Ferner weist die Verschleißnachstelleinrichtung einen Verstellring auf, der zwischen dem Hebelelement und einem Deckelbauteil angeordnet ist, und dessen Rampen gleitbeweglich auf Gegenrampen angeordnet sind, die am Deckelbauteil ausgebildet sind. Ferner ist der Verstellring gegenüber dem Deckelbauteil durch zumindest eine Antriebseinrichtung, insbesondere zumindest eine Antriebsfeder, derart in Umfangsrichtung vorgespannt, dass die Rampen des Verstellrings unter der Federvorspannung an den Gegenrampen des Deckelbauteils hochgleiten können.

Damit ist die Kupplungsvorrichtung mit einer Verschleißnachstelleinrichtung zur automatischen Nachstellung von Kupplungsverschleiß ausgestattet, wobei die Verschleißnachstelleinrichtung als kraftbasierte Verschleißnachstelleinrichtung ausgebildet ist. Um bei der automatischen Verschleißnachstelleinrichtung eine ungewollte Verschleißnachstellung, beispielsweise aufgrund von Überweg oder Axialschwingungen der Anpressplatte, zu verhindern, ist das Hebelelement mit dem Zentralflansch in Anlage bringbar. Bei kraftbasierten Verschleißnachstelleinrichtungen wird dadurch das Durchlaufen eines zweiten Regelpunkts verhindert.

Zur genaueren Information über die Merkmale der vorliegenden Erfindung wird ausdrücklich auf die WO 2014/090249 A1 verwiesen. Die Lehre dieser Veröffentlichung ist als Bestandteil des vorliegenden Dokuments anzusehen. Merkmale dieser Veröffentlichung sind Merkmale des vorliegenden Dokuments.

Aus der WO 2009/056092 A1 ist eine Reibungskupplung bekannt zumindest bestehend aus einem Kupplungsgehäuse mit einer drehfest und axial begrenzt zu dieser verlagerbaren Druckplatte, die von einem sich am Kupplungsgehäuse abstützenden Hebelsystem gegenüber einer am Kupplungsgehäuse fest angeordneten Anpressplatte unter Verspannung von Reibbelägen einer Kupplungsscheibe zum Öffnen und Schließen der Reibungskupplung axial verlagerbar ist, bei der in Abhängigkeit von einer Änderung eines Abstands zwischen Anpressplatte und Druckplatte ein Formschluss zwischen einer Verdreheinrichtung, die ein zwischen Druckplatte und dem Hebelsystem angeordnetes Rampensystem zum Ausgleich eines bei Verschleiß auftretenden Fehlabstands zwischen Druckplatte und Hebelsystem verdreht, und einer Steuereinrichtung, die die Verdreheinrichtung mittels des Formschlusses steuert, erfolgt und die Verdreheinrichtung mittels der Steuereinrichtung bei sich öffnender Reibungskupplung verdreht wird.

Aus der DE 10 2012 207 325 A1 ist eine elektrische Maschine gemäß dem Oberbegriff des Anspruchs 1 bekannt.

Aus jeder der US 5 845 750 A und der FR 2 765 288 A1 ist eine Reibungskupplungseinrichtung bekannt, die eine Betätigungseinrichtung mit einer Nachstelleinrichtung zum wegbasierten Verschleißausgleich aufweist.

Der Erfindung liegt die Aufgabe zugrunde, eine eingangs genannte elektrische Maschine baulich und/oder funktional zu verbessern.

Insbesondere soll ein verschleißabhängiger Anstieg eines Arbeitsbereichs einer Tellerfeder reduziert oder vermieden sein. Insbesondere soll eine Nachstellgenauigkeit erhöht sein. Insbesondere sollen bei einem Verschleißausgleich Sprünge reduziert oder vermieden sein. Insbesondere soll ein kontinuierlicher Verschleißausgleich ermöglicht sein. Insbesondere soll ein Aufwand bei einer Ansteuerung einer Betätigungseinrichtung reduziert sein. Insbesondere soll eine Abhängigkeit eines Betriebspunkts der Reibungskupplungseinrichtung von einer Teller-, Sensor-, Blatt- und/oder Belagfeder reduziert oder vermieden sein. Insbesondere soll ein Rutschsicherheitsfaktor reduzierbar sein. Insbesondere sollen Änderungen eines Betriebspunkts der Reibungskupplungseinrichtung reduziert sein. Insbesondere soll ein Vorhalten von Betriebspunktänderungen entfallen können. Insbesondere soll eine Flexibilität zur Auslegung eines Tellerfederkennlinienverlaufs erhöht sein. Insbesondere soll bei einer Auslegung eine Abhängigkeit von einer erforderlichen Überwegsicherheit entfallen. Insbesondere soll ein Rotorinnendurchmesser verringerbar sein. Insbesondere soll die Nachstelleinrichtung in einen Rotor mit verringertem Innendurchmesser integrierbar sein. Insbesondere soll auch bei unterschiedlichen Rotorinnendurchmessern eine einheitliche Positionierung der Nachstelleinrichtung ermöglicht sein. Insbesondere soll eine Genauigkeit einer Regelbarkeit eines von der Reibungskupplungseinrichtung übertragenen Moments erhöht sein. Insbesondere soll ein axialer Bauraumbedarf der Nachstelleinrichtung reduziert sein. Insbesondere soll ein aktuatorseitiger Arbeitsbereich reduziert sein. Insbesondere soll eine Baukastenlösung zur Verfügung gestellt werden. Außerdem soll ein Kraftfahrzeugantriebsstrang mit einer derartigen elektrischen Maschine bereitgestellt werden. Insbesondere soll ausgehend von einem elektromotorischen Fahrbetrieb ein möglichst komfortables Zuschalten einer Brennkraftmaschine ermöglicht sein.

Diese Aufgabe wird mit den in Anspruch 1 angegebenen Maßnahmen gelöst.

Weitere vorteilhafte Ausgestaltungen der vorliegenden Erfindung sind Gegenstand der abhängigen Ansprüche.

Eine elektrische Maschine für einen Kraftfahrzeugantriebsstrang weist einen Stator, einen Rotor und eine in den Rotor integrierte Reibungskupplungseinrichtung auf, die eine Betätigungseinrichtung mit einer Nachstelleinrichtung zum wegbasierten Verschleißausgleich aufweist.

Die elektrische Maschine kann ein Gehäuse aufweisen. Der Stator kann zu dem Gehäuse fest angeordnet sein. Die elektrische Maschine kann eine Drehachse aufweisen. Der Rotor kann um die Drehachse relativ zu dem Stator drehbar sein. Der Stator kann radial außerhalb des Rotors angeordnet sein. Der Rotor kann radial innerhalb des Stators angeordnet sein. Der Rotor kann eine hülsenartige Form aufweisen. Der Rotor kann eine rohrabschnittartige Form aufweisen. Der Rotor kann eine hohlzylindrische Form aufweisen. Die elektrische Antriebsmaschine kann eine Aufnahme für die Reibungskupplungseinrichtung mit ihrer Betätigungseinrichtung mit ihrer Nachstelleinrichtung aufweisen. Die Aufnahme kann eine hülsenartige Form aufweisen. Die Aufnahme kann eine rohrabschnittartige Form aufweisen. Die Aufnahme kann eine hohlzylindrische Form aufweisen. Die Aufnahme kann radial innerhalb des Rotors angeordnet sein. Die Aufnahme kann mit dem Rotor fest verbunden sein. Die Reibungskupplungseinrichtung mit ihrer Betätigungseinrichtung mit ihrer Nachstelleinrichtung kann innerhalb der Aufnahme angeordnet sein. Die Reibungskupplungseinrichtung mit ihrer Betätigungseinrichtung mit ihrer Nachstelleinrichtung kann radial und/oder axial innerhalb der Aufnahme angeordnet sein.

Die elektrische Maschine kann ein Nabenteil aufweisen. Die elektrische Maschine kann einen Zentralflansch aufweisen. Die elektrische Maschine kann einen Nebenflansch aufweisen. Der Zentralflansch und/oder der Nebenflansch können mit der Aufnahme fest verbunden sein. Der Zentralflansch und/oder der Nebenflansch können innerhalb der Aufnahme angeordnet sein. Der Zentralflansch kann an dem Nabenteil drehbar gelagert sein. Die elektrische Maschine kann ein Zentrallager zur drehbaren Lagerung des Zentralflansches an dem Nabenteil aufweisen. Das Zentrallager kann zwischen dem Zentralflansch und dem Nabenteil angeordnet sein. Das Zentrallager kann als zweireihiges Kugellager ausgeführt sein.

Die Reibungskupplungseinrichtung kann eine Drehachse aufweisen. Die Drehachse der Reibungskupplungseinrichtung kann der Drehachse der elektrischen Maschine entsprechen. Die Reibungskupplungseinrichtung kann eine Druckplatte aufweisen. Die Druckplatte kann mit der Aufnahme fest verbunden sein. Die Reibungskupplungseinrichtung kann eine Anpressplatte aufweisen. Die Anpressplatte kann mit der Aufnahme drehfest und axial begrenzt verlagerbar verbunden sein. Die Anpressplatte kann relativ zu der Druckplatte axial begrenzt verlagerbar sein. Die Reibungskupplungseinrichtung kann eine Kupplungsscheibe mit Reibbelägen aufweisen. Die Kupplungsscheibe kann zur reibschlüssigen Übertragung einer mechanischen Leistung zwischen der Druckplatte und der Anpressplatte einklemmbar sein.

Die Reibungskupplungseinrichtung kann ein erstes Kupplungsteil und ein zweites Kupplungsteil aufweisen. Das erste Kupplungsteil kann die Kupplungsscheibe aufweisen. Das erste Kupplungsteil kann mit der Brennkraftmaschine antriebsverbunden sein. Das zweite Kupplungsteil kann die Druckplatte und die Anpressplatte aufweisen. Das zweite Kupplungsteil kann mit der Aufnahme antriebsverbunden sein. Das zweite Kupplungsteil kann mit dem der Getriebeeinrichtung antriebsverbunden sein. Das zweite Kupplungsteil kann mit der wenigstens einen Eingangswelle der Getriebeeinrichtung antriebsverbunden sein.

Die Reibungskupplungseinrichtung kann ausgehend von einer vollständig ausgerückten Betätigungsstellung, in der zwischen dem ersten Kupplungsteil und dem zweiten Kupplungsteil im Wesentlichen keine Leistungsübertragung erfolgt, bis hin zu einer vollständig eingerückten Betätigungsstellung, in der zwischen dem ersten Kupplungsteil und dem zweiten Kupplungsteil im Wesentlichen eine vollständige Leistungsübertragung erfolgt, betätigungsabhängig eine zunehmende Leistungsübertragung ermöglichen, wobei eine Leistungsübertragung zwischen dem ersten Kupplungsteil und dem zweiten Kupplungsteil kraftschlüssig, insbesondere reibschlüssig, erfolgt. Umgekehrt kann ausgehend von einer vollständig eingerückten Betätigungsstellung, in der zwischen dem ersten Kupplungsteil und dem zweiten Kupplungsteil im Wesentlichen eine vollständige Leistungsübertragung erfolgt, bis hin zu einer vollständig ausgerückten Betätigungsstellung, in der zwischen dem ersten Kupplungsteil und dem zweiten Kupplungsteil im Wesentlichen keine Leistungsübertragung erfolgt, betätigungsabhängig eine abnehmende Leistungsübertragung ermöglicht sein. Eine vollständig eingerückte Betätigungsstellung kann eine geschlossene Betätigungsstellung sein. Eine vollständig ausgerückte Betätigungsstellung kann eine offene Betätigungsstellung sein.

Mithilfe der Betätigungseinrichtung kann die Anpressplatte der Reibungskupplungseinrichtung axial verlagerbar sein. Mithilfe der Betätigungseinrichtung kann die Reibungskupplungseinrichtung geöffnet oder geschlossen werden. Mithilfe der Betätigungseinrichtung kann die Reibungskupplungseinrichtung eingerückt oder ausgerückt werden. Die Betätigungseinrichtung kann eine Federeinrichtung aufweisen. Die Federeinrichtung kann die Anpressplatte in Richtung der Einrückposition beaufschlagen. Die Reibungskupplungseinrichtung kann selbsttätig schließend sein. Die Federeinrichtung kann eine erste Tellerfeder aufweisen. Die erste Tellerfeder kann Federzungen aufweisen. Die erste Tellerfeder kann als Hebelfeder wirken. Die Federeinrichtung kann eine zweite Tellerfeder aufweisen. Die zweite Tellerfeder kann als Hebelfeder wirken. Die erste Tellerfeder und die zweite Tellerfeder können mithilfe eines Koppelelements miteinander gekoppelt sein. Das Koppelelement kann die erste Tellerfeder und die zweite Tellerfeder jeweils radial außenseitig umgreifen. Das Koppelelement kann hülsenartige Form aufweisen. Das erste Kupplungsteil der Reibungskupplungseinrichtung kann mit einer Ausgangswelle der Brennkraftmaschine antriebsverbindbar sein. Das erste Kupplungsteil der Reibungskupplungseinrichtung kann mit einem Ausgangsteil des Drehschwingungsdämpfers antriebsverbindbar sein. Das zweite Kupplungsteil der Reibungskupplungseinrichtung kann mit einer Eingangswelle der Getriebeeinrichtung antriebsverbindbar sein.

Die Betätigungseinrichtung kann einen Aktuator aufweisen. Der Aktuator kann einen Elektromotor aufweisen. Der Aktuator kann eine Statoreinrichtung, eine bezüglich der Statoreinrichtung verdrehbare Rotoreinrichtung und eine bezüglich der Rotoreinrichtung in axialer Richtung begrenzt verlagerbaren Schlitteneinrichtung aufweisen. Zwischen der Rotoreinrichtung und der Schlitteneinrichtung kann ein Wälzkörpergewindetrieb mit Windungen und einem Wälzkörperumlauf mit Wälzkörpern vorgesehen sein. Die Betätigungseinrichtung kann ein Ausrücklager aufweisen. Das Ausrücklager kann einen Innenring und einen Außenring aufweisen. Der Innenring kann an der Schlitteneinrichtung angeordnet sein. Der Außenring kann an der Tellerfeder angeordnet sein.

Die Nachstelleinrichtung kann einen verdrehbaren ersten Verstellring und einen Spindelantrieb mit einer Spindel, einem Antriebsritzel, einer Antriebsklinke und einer Antriebsfeder zum Verdrehen des ersten Verstellrings aufweisen. Die Nachstelleinrichtung kann einen drehfesten zweiten Verstellring aufweisen. Der zweite Verstellring kann Fortsätze aufweisen, die axial durch den Zentralflansch hindurchreichen. Der zweite Verstellring kann einerseits an dem ersten Verstellring und andererseits an der zweiten Tellerfeder anliegen. Die Federeinrichtung kann mithilfe der Nachstelleinrichtung verstellbar sein. Der erste Verstellring kann um die Drehachse der elektrischen Maschine verdrehbar sein. Ein Verdrehen des ersten Verstellrings kann eine Verstellung der Federeinrichtung bewirken. Der erste Verstellring kann erste Rampen aufweisen. An der Anpressplatte können zweite Rampen angeordnet sein. Die ersten Rampen können mit den zweiten Rampen korrespondieren.

Der Spindelantrieb kann eine Wandlung einer Bewegung ermöglichen. Die Spindel kann um eine Spindelachse drehbar sein. Die Spindel kann eine Gewindespindel sein. Die Spindel kann eine Schneckenspindel sein. Ein Drehen der Spindel kann ein Verdrehen des ersten Verstellrings bewirken. Das Antriebsritzel kann mit der Spindel drehfest verbunden sein. Das Antriebsritzel kann eine Außenverzahnung aufweisen. Die Zähne der Außenverzahnung können jeweils eine sägezahnartige Form aufweisen. Die Nachstelleinrichtung kann eine Sperrklinke zum Sperren des Antriebsritzels aufweisen. Die Sperrklinke kann dazu dienen, ein unbeabsichtigtes Verstellen der Nachstelleinrichtung zu verhindern.

Eine in den Rotor integrierte Reibungskupplungseinrichtung kann eine Reibungskupplungseinrichtung sein, die zumindest annähernd vollständig innerhalb des Rotors angeordnet ist. Eine in den Rotor integrierte Reibungskupplungseinrichtung kann eine Reibungskupplungseinrichtung sein, die radial zumindest annähernd vollständig innerhalb des Rotors angeordnet ist. Eine in den Rotor integrierte Reibungskupplungseinrichtung kann eine Reibungskupplungseinrichtung sein, die axial zumindest annähernd vollständig innerhalb des Rotors angeordnet ist. Die Reibungskupplungseinrichtung und die Betätigungseinrichtung können axial nebeneinander angeordnet sein. Die Betätigungseinrichtung kann auf einer einer Brennkraftmaschine zugewandten Seite angeordnet sein. Die Reibungskupplungseinrichtung kann auf einer einer Getriebeeinrichtung zugewandten Seite angeordnet sein.

Die Spindel und das Antriebsritzel können an der Anpressplatte angeordnet sein. Die Spindel und das Antriebsritzel können radial zwischen der Anpressplatte und dem Zentrallager angeordnet sein. Die Antriebsklinke und die Antriebsfeder können an dem Zentralflansch angeordnet sein. Die Sperrklinke kann an der Anpressplatte angeordnet sein. Der zweite Verstellring kann axial zwischen dem ersten Verstellring und der Tellerfeder angeordnet sein. Die Antriebsklinke kann mithilfe einer Justierschraube einstellbar sein. Die Nachstelleinrichtung kann eine Spindelmutter mit einem Mitnehmerdorn aufweisen, der in eine Ausnehmung des ersten Verstellrings eingreift.

Ein Kraftfahrzeugantriebsstrang weist eine Brennkraftantriebsmaschine, eine derartige elektrische Maschine und eine Getriebeeinrichtung auf, wobei die Reibungskupplungseinrichtung zwischen der Brennkraftantriebsmaschine einerseits und der elektrischen Maschine sowie der Getriebeeinrichtung andererseits angeordnet ist.

Der Kraftfahrzeugantriebsstrang kann wenigstens ein antreibbares Fahrzeugrad aufweisen. Der Kraftfahrzeugantriebsstrang kann einen Drehschwingungsdämpfer, insbesondere ein Zweimassenschwungrad, aufweisen. Der Kraftfahrzeugantriebsstrang kann ein Hybrid-Antriebsstrang sein. Der Kraftfahrzeugantriebsstrang kann ein Parallelhybrid-Antriebsstrang sein. Der Kraftfahrzeugantriebsstrang kann ein Vollhybrid-Antriebsstrang sein. Der Kraftfahrzeugantriebsstrang kann einen ersten Energiewandler und einen zweiten Energiewandler aufweisen. Der erste Energiewandler kann zur Wandlung chemischer Energie in kinetische Energie dienen. Die Brennkraftantriebsmaschine kann der erste Energiewandler sein. Die Brennkraftantriebsmaschine kann mit einem Kohlenwasserstoff, wie Benzin, Diesel, Flüssiggas (Liquefied Petroleum Gas, LPG, GPL), verdichtetem Erdgas (Compressed Natural Gas, CNG) oder flüssigem Erdgas (Liquefied Natural Gas, LNG) betreibbar sein. Die Brennkraftantriebsmaschine kann mit Wasserstoff betreibbar sein. Zur Energieversorgung des ersten Energiewandlers kann ein erster Energiespeicher vorgesehen sein. Der erste Energiespeicher kann ein Kraftstofftank sein. Der erste Energiespeicher kann ein Fluidtank sein. Der zweite Energiewandler kann zur Wandlung elektrischer Energie in kinetische Energie dienen. Der zweite Energiewandler kann zur Wandlung kinetischer Energie in elektrischer Energie dienen. Die elektrische Maschine kann der zweite Energieumwandler sein. Die elektrische Maschine kann als Motor betreibbar sein. Die elektrische Maschine kann als Generator betreibbar sein. Die elektrische Maschine kann einen Motor und einen Generator baulich vereinigen. Zur Energieversorgung des zweiten Energiewandlers kann ein zweiter Energiespeicher vorgesehen sein. Der zweite Energiespeicher kann ein elektrischer Energiespeicher sein. Der zweite Energiespeicher kann ein Akkumulator sein. Der erste Energiewandler und/oder der zweite Energiewandler können zum wahlweisen oder parallelen Antrieb des Kraftfahrzeugs dienen. Der zweite Energiewandler kann zum Starten der Brennkraftantriebsmaschine dienen. Der zweite Energiewandler kann zur Energierückgewinnung dienen.

Die Getriebeeinrichtung kann wenigstens eine Getriebeeingangswelle und eine Getriebeausgangswelle aufweisen. Die Bezeichnungen "Eingangswelle" und "Ausgangswelle" sind auf eine von der Brennkraftantriebsmaschine oder von der elektrischen Maschine ausgehende Leistungsflussrichtung bezogen. Die Getriebeeinrichtung kann ein Stufengetriebe aufweisen. Die Getriebeeinrichtung kann ein stufenloses Getriebe aufweisen. Die Getriebeeinrichtung kann einen Leistungspfad aufweisen. Die Getriebeeinrichtung kann mehrere zumindest abschnittsweise parallele Leistungspfade aufweisen. Die Getriebeeinrichtung kann einen hydraulischen Drehmomentwandler aufweisen. Die Getriebeeinrichtung kann Kupplungen und/oder Bremsen aufweisen. Die Getriebeeinrichtung kann manuell schaltbar sein. Die Getriebeeinrichtung kann automatisiert schaltbar sein. Die wenigstens eine Getriebeeingangswelle kann mit der elektrischen Maschine antriebsverbindbar sein. Die wenigstens eine Getriebeeingangswelle kann mit dem Rotor der elektrischen Maschine antriebsverbindbar sein. Die wenigstens eine Getriebeeingangswelle kann mit der Reibungskupplungseinrichtung antriebsverbunden sein. Die Getriebeausgangswelle kann mit dem wenigstens einen antreibbaren Rad antriebsverbunden sein.

Zusammenfassend und mit anderen Worten dargestellt ergibt sich somit unter anderem eine rotorintegrierte Trennkupplung mit radial innenliegender Weg-Nachstellung. Eine rotorintegrierte Trennkupplung kann eine weggesteuerte Verschleißnachstellung in Form eines Ritzel-Spindel-Systems aufweisen. Das Ritzel-Spindel-System kann an einer Anpressplatte gelagert sein. Das Ritzel-Spindel-Systems kann unterhalb einer Reibfläche und oberhalb eines Zentrallagers platziert sein. Eine Antriebsklinke und eine Antriebsfeder können an einem Zentralflansch befestigt sein. Das Ritzel-Spindel-System kann an der Anpressplatte befestigt sein. Ein Sperrklinkenblech kann an der Anpressplatte befestigt sein. Ein mit Rampen versehener Verstellring kann anpressplattenseitig platziert sein. Dieser Verstellring kann durch eine Translationsbewegung einer Spindel-Mutter um eine Rotationsachse der Kupplung drehbar sein. Durch diese Drehbewegung kann ein Verschleiß an einer Kupplungsscheibe kompensierbar sein. Ein drehfester Verstellring kann tellerfederseitig platziert sein. Dieser Verstellring kann mit Nocken zur Übertragung einer Anpresskraft versehen sein. Eine Justageschraube zur Einstellung des Betriebspunkts kann auf der Antriebsklinke platziert sein. Die Justageschraube kann in eine Nut eines drehfesten Verstellrings eingreifen. Eine Positionierung der Justierschraube auf einer Anpressplattenseite kann eine einfache Zugänglichkeit nach der Montage der Kupplung ermöglichen. Es kann eine Spindel-Mutter mit Mitnahmedorn für den Verstellring vorgesehen sein. Der Mitnahmedorn kann in Langlöcher des Verstellrings eingreifen. Eine Nachstelleinheit kann zwischen Zentrallager und Anpressplatte angeordnet sein. Eine einheitliche Positionierung bei unterschiedlichen Rohrinnendurchmessern (Baukastenlösung) kann ermöglicht sein.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Es wird ein verschleißabhängiger Anstieg eines Arbeitsbereichs einer Tellerfeder reduziert oder vermieden. Eine Nachstellgenauigkeit ist erhöht. Bei einem Verschleißausgleich sind Sprünge bei einem Ausrückvorgang reduziert oder vermieden. Ein zumindest annähernd kontinuierlicher Verschleißausgleich ist ermöglicht. Ein Aufwand bei einer Ansteuerung einer Betätigungseinrichtung ist reduziert. Eine Abhängigkeit eines Betriebspunkts der Reibungskupplungseinrichtung von einer Teller-, Sensor-, Blatt- und/oder Belagfeder ist reduziert oder vermieden. Ein Rutschsicherheitsfaktor ist reduzierbar. Änderungen eines Betriebspunkts der Reibungskupplungseinrichtung sind reduziert. Eine Vorhaltung von Betriebspunktänderungen kann reduziert sein. Eine Flexibilität zur Auslegung eines Tellerfederkennlinienverlaufs ist erhöht. Bei einer Auslegung entfällt eine Abhängigkeit von einer erforderlichen Überwegsicherheit. Ein Rotorinnendurchmesser ist verringerbar. Die Nachstelleinrichtung ist in einen Rotor mit verringertem Innendurchmesser integrierbar. Auch bei unterschiedlichen Rotorinnendurchmessern ist eine einheitliche Positionierung der Nachstelleinrichtung ermöglicht. Eine Genauigkeit einer Regelbarkeit eines von der Reibungskupplungseinrichtung übertragenen Moments ist erhöht. Ein axialer Bauraumbedarf der Nachstelleinrichtung ist reduziert. Ein aktuatorseitiger Arbeitsbereich ist reduziert. Eine Baukastenlösung wird zur Verfügung gestellt. Außerdem wird ein Kraftfahrzeugantriebsstrang mit einer derartigen elektrischen Maschine bereitgestellt. Ausgehend von einem elektromotorischen Fahrbetrieb ist ein Zuschalten einer Brennkraftmaschine mit erhöhtem Komfort ermöglicht.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: eine in einen Rotor einer elektrischen Maschine integrierte Reibungskupplung mit einer Betätigungseinrichtung mit einer Nachstelleinrichtung zum wegbasierten Verschleißausgleich in einer ersten Schnittansicht,
- Fig. 2: eine in einen Rotor einer elektrischen Maschine integrierte Reibungskupplung mit einer Betätigungseinrichtung mit einer Nachstelleinrichtung zum wegbasierten Verschleißausgleich in einer zweiten Schnittansicht,
- Fig. 3: eine Anpressplatte, einen drehbaren Verstellring, eine Spindel, ein Antriebsritzel und eine Sperrklinke als Vormontagebaugruppe in perspektivischer Ansicht,
- Fig. 4: eine Nachstelleinrichtung in einem Neuzustand in Draufsicht und in seitlicher Ansicht,
- Fig. 5: eine Nachstelleinrichtung in einem Verschleißzustand in Draufsicht und in seitlicher Ansicht,
- Fig. 6: eine Nachstelleinrichtung mit einer Spindelmutter mit Mitnehmerdorn in Schnittansicht,
- Fig. 7: eine Nachstelleinrichtung mit einer Justierschraube zum Einstellen einer Antriebsklinke in Schnittansicht,
- Fig. 8: eine Nachstelleinrichtung mit an einem Zentralflansch angeordneter Antriebsklinke und Antriebsfeder in Draufsicht und
- Fig. 9: einen Antriebsstrang eines Kraftfahrzeugs mit einem parallelen Vollhybridantrieb und einer in dem Antriebsstrang angeordneten Reibungskupplung.

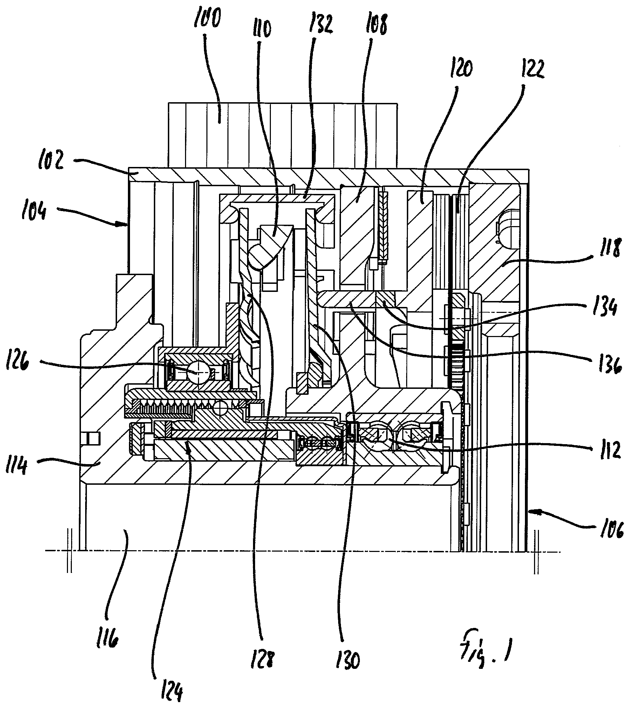

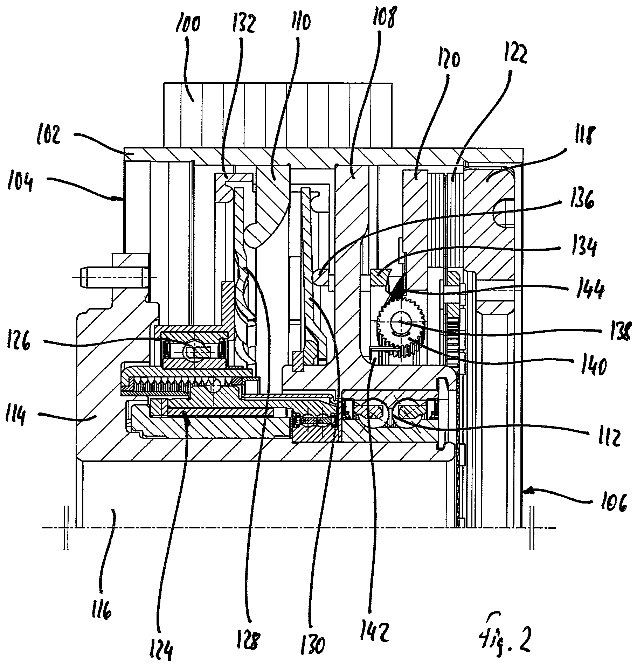

Fig. 1 zeigt eine in einen Rotor 100 einer elektrischen Maschine integrierte Reibungskupplung mit einer Betätigungseinrichtung mit einer Nachstelleinrichtung zum wegbasierten Verschleißausgleich in einer ersten Schnittansicht. Fig. 2 zeigt die Reibungskupplung in einer zweiten Schnittansicht.

Radial innerhalb des Rotors 100 ist eine hohlzylindrische Aufnahme 102 angeordnet und mit dem Rotor 100 fest verbunden. Die Aufnahme 102 weist eine Brennkraftmaschinenseite 104 und eine Getriebeseite 106 auf. Radial innerhalb der Aufnahme 102 sind ein Zentralflansch 108 und ein Nebenflansch 110 angeordnet und mit der Aufnahme 102 fest verbunden. Der Zentralflansch 108 ist mithilfe eines Zentrallagers 112 an einem radial innerhalb des Zentralflansches 108 angeordneten Nabenteil 114 drehbar gelagert.

Das Nabenteil 114 weist einen Flanschabschnitt und einen Hülsenabschnitt auf. Der Flanschabschnitt des Nabenteils 114 ist brennkraftmaschinenseitig angeordnet. Der Hülsenabschnitt des Nabenteils 114 erstreckt sich ausgehend von dem Flanschabschnitt zur Getriebeseite 106 hin. Das Nabenteil 114 bildet eine axiale Durchführung 116.

Der Zentralflansch 108 ist getriebeseitig des Nebenflansches 110 angeordnet. Der Zentralflansch 108 weist einen T-förmigen Querschnitt mit einem radial äußeren Flanschabschnitt und einem radial inneren Hülsenabschnitt auf. Das Zentrallager 112 weist einen Innenring und einen Außenring auf. Der Zentralflansch 108 ist mit seinem Hülsenabschnitt an dem Außenring des Zentrallagers 112 angeordnet. Das Zentrallager 112 ist mit seinem Innenring an dem Nabenteil 114 getriebeseitig angeordnet.

Die Reibungskupplung weist eine Druckplatte 118, eine Anpressplatte 120 und eine Kupplungsscheibe 122 mit Reibbelägen auf. Die Druckplatte 118, die Anpressplatte 120 und die Kupplungsscheibe 122 sind getriebeseitig des Zentralflansches 108 angeordnet. Die Druckplatte 118 ist radial innerhalb der Aufnahme 102 angeordnet und mit der Aufnahme 102 fest verbunden. Die Anpressplatte 120 ist radial innerhalb der Aufnahme 102 axial zwischen dem Zentralflansch 108 und der Druckplatte 118 angeordnet und mit der Aufnahme 102 drehfest verbunden. Die Anpressplatte 120 ist relativ zu der Druckplatte 118 zwischen einer eingerückten Betätigungsstellung und einer ausgerückten Betätigungsstellung axial verlagerbar. Die Kupplungsscheibe 122 ist axial zwischen der Druckplatte 118 und der Anpressplatte 120 angeordnet und zur reibschlüssigen Übertragung einer mechanischen Leistung zwischen der Druckplatte 118 und der Anpressplatte 120 einklemmbar. Die Kupplungsscheibe 122 ist in einer Einbausituation mit einer Brennkraftmaschine verbunden. Zur Verbindung der Kupplungsscheibe 122 mit der Brennkraftmaschine ist dann durch die Durchführung 116 eine Welle hindurchgeführt.

Die Betätigungseinrichtung weist einen Aktuator 124 auf. Der Aktuator 124 ist an dem Hülsenabschnitt des Nabenteils 114 axial zwischen dem Flanschabschnitt des Nabenteils 114 und dem Zentrallager 112 angeordnet. Der Aktuator 124 weist einen Elektromotor mit einem Stator und einem Rotor auf. Der Stator ist fest an dem Nabenteil 114 angeordnet. Der Rotor ist zu dem Stator drehbar. Der Aktuator 124 weist einen axial zwischen zwei Endlagen verlagerbaren Schlitten auf. Zwischen dem Rotor und dem Schlitten ist ein Wälzkörpergewindetrieb mit Windungen und einem Wälzkörperumlauf mit Wälzkörpern angeordnet. Ein Drehen des Rotors bewirkt ein axiales Verlagern des Schlittens. Die Betätigungseinrichtung weist ein Ausrücklager 126 auf. Das Ausrücklager 126 weist einen Innenring und einen Außenring auf. Der Innenring des Ausrücklagers 126 ist an dem Schlitten des Aktuators 124 fest angeordnet.

Die Betätigungseinrichtung weist eine Federeinrichtung auf, die die Reibungskupplung in Schließrichtung beaufschlagt. Die Federeinrichtung weist eine erste Tellerfeder 128 auf. Mithilfe des Aktuators 124 ist die erste Tellerfeder beaufschlagbar. Der Außenring des Ausrücklagers 126 ist der ersten Tellerfeder 128 zugeordnet. Die erste Tellerfeder 128 weist einen Innenrand auf. Mithilfe des Aktuators 124 ist die erste Tellerfeder an ihrem Innenrand beaufschlagbar. Die erste Tellerfeder 128 ist brennkraftmaschinenseitig des Nebenflansches 110 angeordnet. Die erste Tellerfeder 128 ist an dem Nebenflansch 110 verschwenkbar gelagert. Die Federeinrichtung weist eine zweite Tellerfeder 130 auf. Die zweite Tellerfeder 130 ist zwischen dem Nebenflansch 110 und dem Zentralflansch 108 angeordnet. Die erste Tellerfeder 128 und die zweite Tellerfeder 130 sind mithilfe eines hülsenförmigen Koppelelements 132 miteinander gekoppelt. Das Koppelelement 132 weist Fortsätze auf, die axial durch den Nebenflansch 110 hindurch reichen. Das Koppelelement 132 umgreift die erste Tellerfeder 128 und die zweite Tellerfeder 130 jeweils radial außenseitig. Die zweite Tellerfeder 130 weist einen Innenrand auf. Die zweite Tellerfeder 130 ist an ihrem Innenrand verschwenkbar gelagert.

Die Nachstelleinrichtung ist axial zwischen der zweiten Tellerfeder 130 und der Anpressplatte 120 angeordnet. Die Nachstelleinrichtung weist einen verdrehbaren Verstellring 134 und einen drehfesten Verstellring 136 auf. Der drehfeste Verstellring 136 weist Fortsätze auf, die axial durch den Zentralflansch 108 hindurch reichen.

Bei einer Betätigung des Aktuators 124 in Kupplungsöffnungsrichtung wird der Schlitten des Aktuators 124 in Richtung der Getriebeseite 106 verlagert. Über das Ausrücklager 126 wird die erste Tellerfeder 128 beaufschlagt und verschwenkt derart, dass sich das Koppelelement 132 in Richtung der Brennkraftmaschinenseite 104 verlagert. Mithilfe des Koppelelements 132 wird die zweite Tellerfeder 130 mitgenommen und der verdrehbare Verstellring 134 und der drehfeste Verstellring 136 verlagern sich in Richtung der Brennkraftmaschinenseite 104. Die Anpressplatte 120 verlagert sich in Richtung der Brennkraftmaschinenseite 104 und die Reibungskupplung öffnet. Bei einer Betätigung des Aktuators 124 in Kupplungsschließrichtung wird der Schlitten des Aktuators 124 in Richtung der Brennkraftmaschinenseite 104 verlagert und es erfolgt umgekehrt federkraftunterstützt ein Schließen der Reibungskupplung.

Der verdrehbare Verstellring 134 und die Anpressplatte 120 sind zueinander konzentrisch angeordnet. Der verdrehbare Verstellring 134 ist relativ zu der Anpressplatte 120 um die Drehachse verdrehbar. Die Anpressplatte 120 weist Rampenabschnitte auf. Der verdrehbare Verstellring 134 weist Gegenrampenabschnitte auf. Die Rampenabschnitte und die Gegenrampenabschnitte sind gegenläufig ansteigend. Die Rampenabschnitte und die Gegenrampenabschnitte korrespondieren miteinander. Eine Verdrehung des Verstellrings 134 bewirkt eine Veränderung eines Abstands zwischen der Anpressplatte 120 und dem verdrehbaren Verstellring 134 und damit eine Verschleißnachstellung der Kupplung.

Zum wegbasierten verschleißabhängigen Verdrehen des Verstellrings 134 ist ein Spindeltrieb vorgesehen. Der Spindeltrieb weist eine Spindel 138 auf. An der Spindel 138 ist ein Antriebsritzel 140 angeordnet. Die Spindel 138 ist an der Anpressplatte 120 drehbar gehalten. Ein Antrieb des Spindeltriebs erfolgt mithilfe einer Antriebsklinke 142. Die Antriebsklinke 142 ist an dem Zentralflansch 108 angeordnet. Die Antriebsklinke 142 wirkt mit dem Antriebsritzel 140 des Spindeltriebs zusammen.

Bei einer Betätigung der Reibungskupplung und einer dabei erfolgenden Verlagerung der Anpressplatte 120 können sich die Antriebsklinke 142 und das Antriebsritzel 140 des Spindeltriebs 108 relativ zueinander bewegen. Bei einem Betrieb ohne Verschleiß erfolgt keine Verdrehung des Antriebsritzels 140. Bei einem ausreichenden Verschleiß der Kupplung greift die Antriebsklinke 142 bei einem Einrücken der Kupplung in Zähne des Antriebsritzels 140 ein und verdreht bei einem Ausrücken der Kupplung das Antriebsritzel 140, sodass der Spindeltrieb betätigt und der Verstellring 134 verdreht wird. Damit erfolgt eine Verschleißnachstellung.

Die Nachstelleinrichtung weist eine Sperreinrichtung auf. Die Sperreinrichtung dient dazu, ein unbeabsichtigtes Verstellen der Nachstelleinrichtung zu verhindern. Die Sperreinrichtung weist eine Sperrklinke 144 zum Sperren des Antriebsritzels 140 auf. Die Sperrklinke 144 ist an der Anpressplatte 120 angeordnet. Die Sperrklinke 144 greift in die Verzahnung des Antriebsritzels 140 ein und bildet mit dem Antriebsritzel 140 eine sperrklinkenfreilaufartige Verbindung. Die Sperrklinke 144 weist einen Federabschnitt auf und ist blattfederartig ausgeführt.

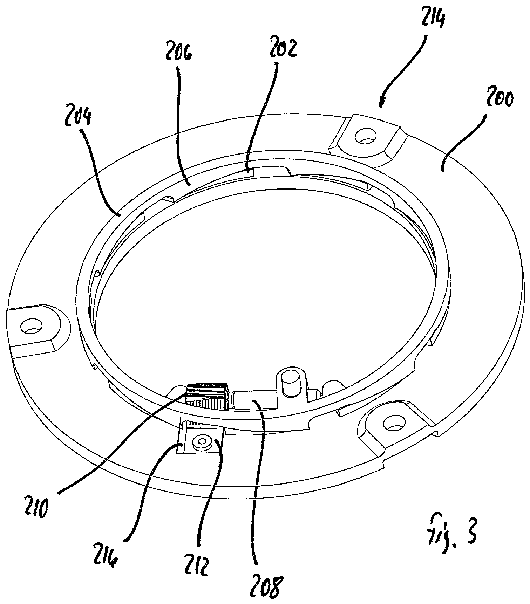

Fig. 3 zeigt eine Anpressplatte 200 mit Rampenabschnitten, wie 202, einen drehbaren Verstellring 204 mit Gegenrampenabschnitten, wie 206, eine Spindel 208, ein Antriebsritzel 210 und eine Sperrklinke 212 als Vormontagebaugruppe 214 in perspektivischer Ansicht. In der Anpressplatte 200 ist eine Ausnehmung 216 für die Sperrklinke 212 vorgesehen. Im Übrigen wird ergänzend insbesondere auf Fig. 1 und Fig. 2 sowie die zugehörige Beschreibung verwiesen.

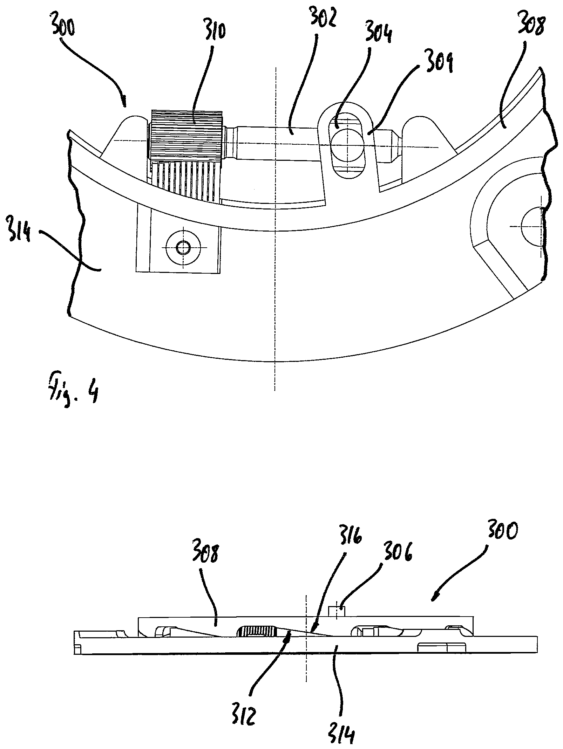

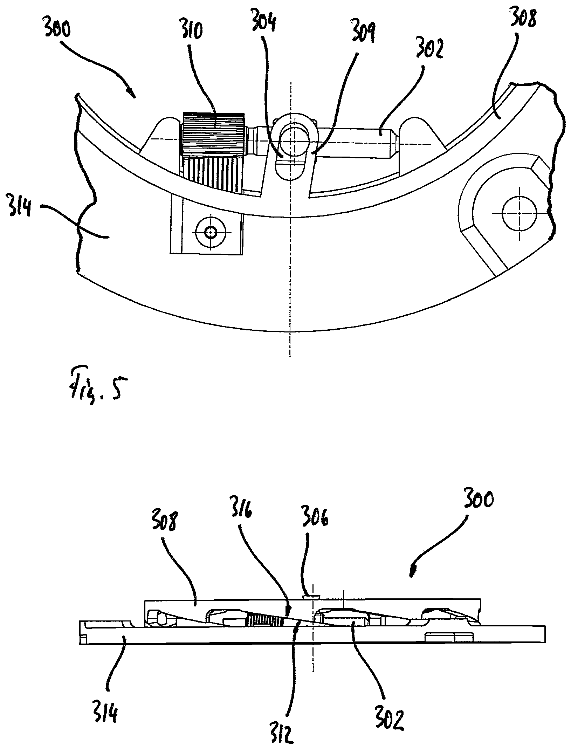

Fig. 4 zeigt eine Nachstelleinrichtung 300 in einem Neuzustand in Draufsicht und in seitlicher Ansicht. Fig. 5 zeigt die Nachstelleinrichtung 300 in einem Verschleißzustand in Draufsicht und in seitlicher Ansicht. An der Spindel 302 ist eine Spindelmutter 304 angeordnet. Ein Drehen der Spindel 302 bewirkt eine translatorische Bewegung der Spindelmutter 304. Die Spindelmutter 304 weist einen Mitnehmerdorn 306 auf. Der drehbare Verstellring 308 weist eine Lasche 309 mit einer Aufnahme für den Mitnehmerdorn 306 auf. Ein Drehen der Spindel 302 bewirkt damit ein Verdrehen des Verstellrings 308. Im Neuzustand ist die Spindelmutter 304 an einem von dem Antriebsritzel 310 entfernten Ende der Spindel 302 angeordnet. Die Rampenabschnitte, wie 312, der Anpressplatte 314 liegen im Neuzustand mit großer Überdeckung an den Gegenrampenabschnitten, wie 316, des Verstellrings 308 an, sodass ein axialer Abstand zwischen der Anpressplatte 314 und dem Verstellring 308 gering ist. Im Verschleißzustand ist die Spindelmutter 304 zu dem Antriebsritzel 310 hin verstellt. Die Rampenabschnitte 312 der Anpressplatte 314 liegen im Verschleißzustand mit verringerter Überdeckung an den Gegenrampenabschnitten 316 des Verstellrings 308 an, sodass ein axialer Abstand zwischen der Anpressplatte 314 und dem Verstellring 308 vergrößert ist. Im Übrigen wird ergänzend insbesondere auf Fig. 1 und Fig. 2 sowie die zugehörige Beschreibung verwiesen.

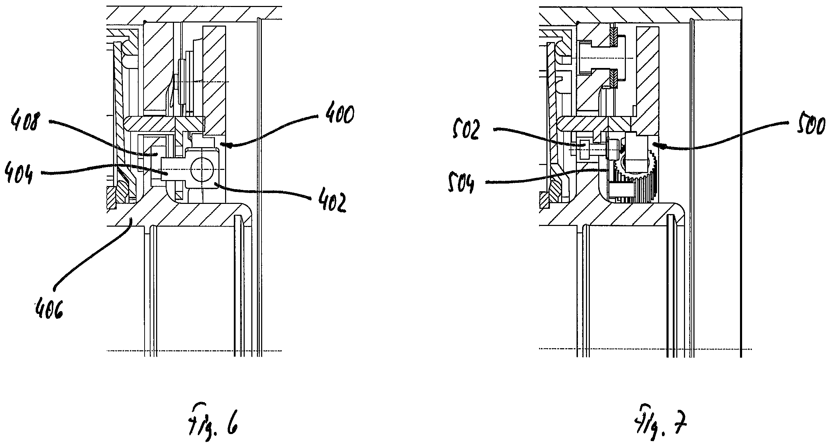

Fig. 6 zeigt eine Nachstelleinrichtung 400 mit einer Spindelmutter 402 mit Mitnehmerdorn 404 in Schnittansicht. In dem Zentralflansch 406 ist eine Ausnehmung 408 für den Mitnehmerdorn 404 angeordnet. Im Übrigen wird ergänzend insbesondere auf Fig. 1 und Fig. 2 sowie die zugehörige Beschreibung verwiesen.

Fig. 7 zeigt eine Nachstelleinrichtung 500 mit einer Justierschraube 502 zum Einstellen einer Antriebsklinke 504 in Schnittansicht. Im Übrigen wird ergänzend insbesondere auf Fig. 1 und Fig. 2 sowie die zugehörige Beschreibung verwiesen.

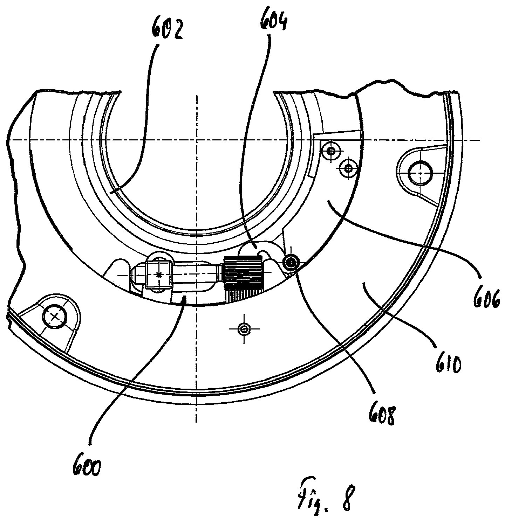

Fig. 8 zeigt eine Nachstelleinrichtung 600 mit an einem Zentralflansch 602 angeordneter Antriebsklinke 604 und Antriebsfeder 606 in Draufsicht. In dieser Ansicht ist auch die Justierschraube 608 ersichtlich. Im Übrigen wird ergänzend insbesondere auf Fig. 1 und Fig. 2 sowie die zugehörige Beschreibung verwiesen.

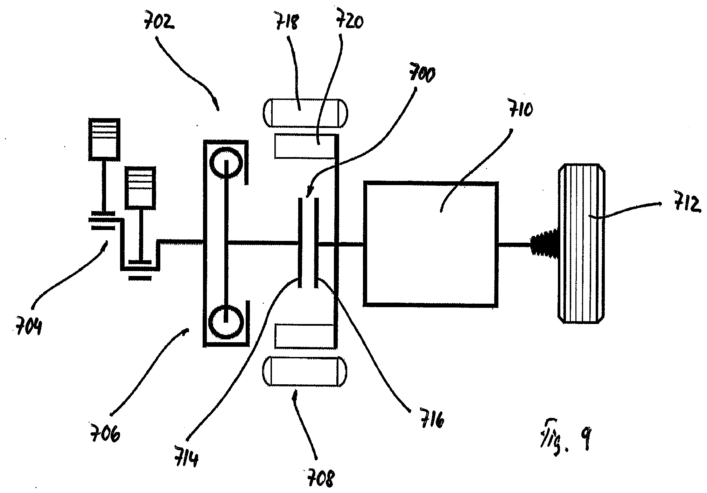

Fig. 9 zeigt einen Antriebsstrang eines Kraftfahrzeugs mit einem parallelen Vollhybridantrieb und einer in dem Antriebsstrang angeordneten Reibungskupplung 700. Der Antriebsstrang 702 weist eine Brennkraftantriebsmaschine 704, ein Zweimassenschwungrad 706, die Reibungskupplung 700, eine elektrische Maschine 708, ein Getriebe 710 und wenigstens ein antreibbares Rad 712 auf. Die elektrische Maschine 708 ist als Motor oder als Generator betreibbar. Die Reibungskupplung 700 ist in dem Antriebsstrang 702 zwischen dem Zweimassenschwungrad 706 und der elektrischen Maschine 708 angeordnet. Die Reibungskupplung 700 ist in dem Antriebsstrang 702 zwischen dem Zweimassenschwungrad 706 und dem Getriebe 710 angeordnet.

Die Reibungskupplung 700 weist ein erstes Kupplungsteil 714 und ein zweites Kupplungsteil 716 auf. Das erste Kupplungseingangsteil 714 ist mit dem Zweimassenschwungrad 706 verbunden. Das zweite Kupplungsteil 716 ist mit der elektrischen Maschine 708 verbunden. Die elektrische Maschine 708 weist einen Stator 718 und einen Rotor 720 auf. Das zweite Kupplungsteil 716 ist mit dem Rotor 720 der elektrischen Maschine 708 verbunden. Das zweite Kupplungsteil 716 ist mit dem Getriebe 710 verbunden. Die elektrische Maschine 708 ist mit dem Getriebe 710 verbunden. Der Rotor 720 der elektrischen Antriebsmaschine 708 ist mit dem Getriebe 710 verbunden. Im Übrigen wird ergänzend insbesondere auf Fig. 1-8 und die zugehörige Beschreibung verwiesen.

### Bezugszeichenliste

- 100: Rotor
- 102: Aufnahme
- 104: Brennkraftmaschinenseite
- 106: Getriebeseite
- 108: Zentralflansch
- 110: Nebenflansch
- 112: Zentrallager
- 114: Nabenteil
- 116: Durchführung
- 118: Druckplatte
- 120: Anpressplatte
- 122: Kupplungsscheibe
- 124: Aktuator
- 126: Ausrücklager
- 128: erste Tellerfeder
- 130: zweite Tellerfeder
- 132: Koppelelement
- 134: drehbarer Verstellring
- 136: drehfester Verstellring
- 138: Spindel
- 140: Antriebsritzel
- 142: Antriebsklinke
- 144: Sperrklinke

- 200: Anpressplatte
- 202: Rampenabschnitt
- 204: drehbarer Verstellring
- 206: Gegenrampenabschnitt
- 208: Spindel
- 210: Antriebsritzel
- 212: Sperrklinke
- 214: Vormontagebaugruppe
- 216: Ausnehmung
- 300: Nachstelleinrichtung
- 302: Spindel
- 304: Spindelmutter
- 306: Mitnehmerdorn
- 308: drehbarer Verstellring
- 309: Lasche
- 310: Antriebsritzel
- 312: Rampenabschnitt
- 314: Anpressplatte
- 316: Gegenrampenabschnitt

- 400: Nachstelleinrichtung
- 402: Spindelmutter
- 404: Mitnehmerdorn
- 406: Zentralflansch
- 408: Ausnehmung

- 500: Nachstelleinrichtung
- 502: Justierschraube
- 504: Antriebsklinke

- 600: Nachstelleinrichtung
- 602: Zentralflansch
- 604: Antriebsklinke
- 606: Antriebsfeder
- 608: Justierschraube
- 610: Anpressplatte

- 700: Reibungskupplung
- 702: Antriebsstrang
- 704: Brennkraftantriebsmaschine
- 706: Zweimassenschwungrad
- 708: elektrische Maschine
- 710: Getriebe
- 712: Rad
- 714: erstes Kupplungsteil
- 716: zweites Kupplungsteil
- 718: Stator
- 720: Rotor

## Patentansprüche

1. Elektrische Maschine (708) für einen Kraftfahrzeugantriebsstrang (702), wobei die elektrische Maschine (708) aufweist:
einen Stator (718),
einen Rotor (100, 720) und
eine in den Rotor (100, 720) integrierte Reibungskupplungseinrichtung (700),
**dadurch gekennzeichnet, dass**
die Reibungskupplungseinrichtung (700) eine Betätigungseinrichtung mit einer Federeinrichtung und einer Nachstelleinrichtung (300, 400, 500, 600) zum wegbasierten Verschleißausgleich aufweist, und
die Federeinrichtung eine erste Tellerfeder (128) und eine zweite Tellerfeder (130) aufweist, die mithilfe eines Koppelelements (132) miteinander gekoppelt sind.

2. Elektrische Maschine (708) nach Anspruch 1, **dadurch gekennzeichnet, dass** die Nachstelleinrichtung (300, 400, 500, 600) einen verdrehbaren ersten Verstellring (134, 204, 308) und einen Spindelantrieb mit einer Spindel (138, 208, 302), einem Antriebsritzel (140, 210, 310), einer Antriebsklinke (142, 504, 604) und einer Antriebsfeder (606) zum Verdrehen des ersten Verstellrings (134, 204, 308) aufweist.

3. Elektrische Maschine (708) nach Anspruch 2, **dadurch gekennzeichnet, dass** die Reibungskupplungseinrichtung (700) eine Anpressplatte (120, 200) aufweist und die Spindel (138, 208, 302) und das Antriebsritzel (140, 210, 310) an der Anpressplatte (120, 200, 610) angeordnet sind.

4. Elektrische Maschine (708) nach Anspruch 2 oder 3, **dadurch gekennzeichnet, dass** die elektrische Maschine (708) ein Zentrallager (112) und die Reibungskupplungseinrichtung (700) eine Kupplungsscheibe mit Reibbelägen aufweist und die Spindel (138, 208, 302) und das Antriebsritzel (140, 210, 310) radial zwischen der Anpressplatte (120, 200, 610) und dem Zentrallager (112) angeordnet sind.

5. Elektrische Maschine (708) nach einem der Ansprüche 2 bis 4, **dadurch gekennzeichnet, dass** die elektrische Maschine (708) einen Zentralflansch (108, 406, 602) aufweist und die Antriebsklinke (142, 504, 604) und die Antriebsfeder (606) an dem Zentralflansch (108, 406, 602) angeordnet sind.

6. Elektrische Maschine (708) nach einem der Ansprüche 2 bis 5, **dadurch gekennzeichnet, dass** die Reibungskupplungseinrichtung (700) eine Anpressplatte (120, 200) und die Nachstelleinrichtung (300, 400, 500, 600) eine Sperrklinke (144, 212) zum Sperren des Antriebsritzels (140, 210, 310) aufweist und die Sperrklinke (144, 212) an der Anpressplatte (120, 200, 610) angeordnet ist.

7. Elektrische Maschine (708) nach einem der Ansprüche 2 bis 6, **dadurch gekennzeichnet, dass** die Nachstelleinrichtung (300, 400, 500, 600) einen drehfesten zweiten Verstellring (136) aufweist und der zweite Verstellring (136) axial zwischen dem ersten Verstellring (134, 204, 308) und der zweiten Tellerfeder (130) angeordnet ist.

8. Elektrische Maschine (708) nach einem der Ansprüche 2 bis 7, **dadurch gekennzeichnet, dass** die Antriebsklinke (142, 504, 604) mithilfe einer Justierschraube (502, 608) einstellbar ist.

9. Elektrische Maschine (708) nach einem der Ansprüche 2 bis 8, **dadurch gekennzeichnet, dass** die Nachstelleinrichtung (300, 400, 500, 600) eine Spindelmutter (304, 402) mit einem Mitnehmerdorn (306, 404) aufweist, der in eine Ausnehmung des ersten Verstellrings (134, 204, 308) eingreift.

## Claims

1. Electric machine (708) for a motor vehicle drive train (702), the electric machine (708) comprising:
a stator (718),
a rotor (100, 720), and
a friction clutch device (700) which is integrated into the rotor (100, 720),
**characterized in that**
the friction clutch device (700) comprises an actuating device having a spring device and an adjusting device (300, 400, 500, 600) for travel-based wear compensation, and
the spring device comprises a first disk spring (128) and a second disk spring (130) which are coupled to one another by a coupling element (132).

2. Electric machine (708) according to Claim 1, **characterized in that** the adjusting device (300, 400, 500, 600) comprises a rotatable first adjustment ring (134, 204, 308) and a spindle drive having a spindle (138, 208, 302), a drive pinion (140, 210, 310), a drive pawl (142, 504, 604) and a drive spring (606) for rotating the first adjustment ring (134, 204, 308).

3. Electric machine (708) according to Claim 2, **characterized in that** the friction clutch device (700) comprises a pressure plate (120, 200), and the spindle (138, 208, 302) and the drive pinion (140, 210, 310) are arranged at the pressure plate (120, 200, 610).

4. Electric machine (708) according to Claim 2 or 3, **characterized in that** the electric machine (708) comprises a central bearing (112), and the friction clutch device (700) comprises a clutch plate with friction linings, and the spindle (138, 208, 302) and the drive pinion (140, 210, 310) are arranged radially between the pressure plate (120, 200, 610) and the central bearing (112).

5. Electric machine (708) according to one of Claims 2 to 4, **characterized in that** the electric machine (708) comprises a central flange (108, 406, 602), and the drive pawl (142, 504, 604) and the drive spring (606) are arranged at the central flange (108, 406, 602).

6. Electric machine (708) according to one of Claims 2 to 5, **characterized in that** the friction clutch device (700) comprises a pressure plate (120, 200), and the adjusting device (300, 400, 500, 600) comprises a locking pawl (144, 212) for locking the drive pinion (140, 210, 310), and the locking pawl (144, 212) is arranged at the pressure plate (120, 200, 610).

7. Electric machine (708) according to one of Claims 2 to 6, **characterized in that** the adjusting device (300, 400, 500, 600) comprises a rotationally fixed second adjustment ring (136), and the second adjustment ring (136) is arranged axially between the first adjustment ring (134, 204, 308) and the second disk spring (130).

8. Electric machine (708) according to one of Claims 2 to 7, **characterized in that** the drive pawl (142, 504, 604) is adjustable by an adjusting screw (502, 608).

9. Electric machine (708) according to one of Claims 2 to 8, **characterized in that** the adjusting device (300, 400, 500, 600) comprises a spindle nut (304, 402) having a driver mandrel (306, 404) which engages into a recess of the first adjustment ring (134, 204, 308).

## Revendications

1. Machine électrique (708) pour une chaîne cinématique d'un véhicule automobile (702), dans laquelle la machine électrique (708) présente:
un stator (718),
un rotor (100, 720), et
un dispositif d'embrayage à friction (700) intégré dans le rotor (100, 720),
**caractérisée en ce que**
le dispositif d'embrayage à friction (700) présente un dispositif d'actionnement avec un système de ressort et un système de réglage (300, 400, 500, 600) pour la compensation de l'usure basée sur le chemin parcouru, et
le système de ressort présente une première rondelle élastique (128) et une deuxième rondelle élastique (130), qui sont couplées l'une à l'autre à l'aide d'un élément de couplage (132).

2. Machine électrique (708) selon la revendication 1, **caractérisée en ce que** le système de réglage (300, 400, 500, 600) présente une première bague de réglage rotative (134, 204, 308) et un entraînement à broche avec une broche (138, 208, 302), un pignon d'entraînement (140, 210, 310), un cliquet d'entraînement (142, 504, 604) et un ressort d'entraînement (606) pour faire tourner la première bague de réglage (134, 204, 308).

3. Machine électrique (708) selon la revendication 2, **caractérisée en ce que** le dispositif d'embrayage à friction (700) présente un plateau de pression (120, 200) et la broche (138, 208, 302) et le pignon d'entraînement (140, 210, 310) sont disposés sur le plateau de pression (120, 200, 610).

4. Machine électrique (708) selon la revendication 2 ou 3, **caractérisée en ce que** la machine électrique (708) présente un palier central (112) et le dispositif d'embrayage à friction (700) présente un disque d'embrayage avec des garnitures de friction et la broche (138, 208, 302) et le pignon d'entraînement (140, 210, 310) sont disposés radialement entre le plateau de pression (120, 200, 610) et le palier central (112).

5. Machine électrique (708) selon l'une quelconque des revendications 2 à 4, **caractérisée en ce que** la machine électrique (708) présente une bride centrale (108, 406, 602) et le cliquet d'entraînement (142, 504, 604) et le ressort d'entraînement (606) sont disposés sur la bride centrale (108, 406, 602).

6. Machine électrique (708) selon l'une quelconque des revendications 2 à 5, **caractérisée en ce que** le dispositif d'embrayage à friction (700) présente un plateau de pression (120, 200) et le système de réglage (300, 400, 500, 600) présente un cliquet d'arrêt (144, 212) pour arrêter le pignon d'entraînement (140, 210, 310) et le cliquet d'arrêt (144, 212) est disposé sur le plateau de pression (120, 200, 610).

7. Machine électrique (708) selon l'une quelconque des revendications 2 à 6, **caractérisée en ce que** le système de réglage (300, 400, 500, 600) présente une deuxième bague de réglage non rotative (136) et la deuxième bague de réglage (136) est disposée axialement entre la première bague de réglage (134, 204, 308) et la deuxième rondelle élastique (130).

8. Machine électrique (708) selon l'une quelconque des revendications 2 à 7, **caractérisée en ce que** le cliquet d'entraînement (142, 504, 604) est réglable à l'aide d'une vis d'ajustage (502, 608).

9. Machine électrique (708) selon l'une quelconque des revendications 2 à 8, **caractérisée en ce que** le système de réglage (300, 400, 500, 600) présente un écrou de broche (304, 402) avec un plot d'entraînement (306, 404), qui s'engage dans un évidement de la première bague de réglage (134, 204, 308).
